# EUROPÄISCHE PATENTSCHRIFT

(11) **EP 3 314 844 B1**
(45) Veröffentlichungstag und Bekanntmachung des Hinweises auf die Patenterteilung: **19.08.2020**
(21) Anmeldenummer: 16731911.0
(22) Anmeldetag: 24.06.2016
(51) Int. Cl.: H04L 29/06, H04L 29/08, G06F 21/62, G06F 21/86

(54) **DATENVERARBEITUNGSEINRICHTUNG UND VERFAHREN ZUM BETRIEB DERSELBEN**
DATA PROCESSING DEVICE AND METHOD FOR OPERATING SAME
DISPOSITIF DE TRAITEMENT DE DONNÉES ET PROCÉDÉ DE FONCTIONNEMENT DUDIT DISPOSITIF DE TRAITEMENT DE DONNÉES

(30) Priorität: 24.06.2015 DE 102015110190
(43) Veröffentlichungstag der Anmeldung: 02.05.2018
(73) Patentinhaber: Uniscon universal identity control GmbH, 80339 München (DE)
(72) Erfinder: ERNST, Edmund, 81373 München (DE); STARK, Franz, 80639 München (DE); JÄGER, Hubert, 82049 Pullach (DE); MONITZER, Arnold, DE-85229 Markt Indersdorf (DE)
(74) Vertreter: 2s-ip Schramm Schneider Bertagnoll Patent- und Rechtsanwälte Part mbB
(86) Internationale Anmeldenummer: PCT/EP2016/064657
(87) Internationale Veröffentlichungsnummer: WO 2016/207344

(56) Entgegenhaltungen:
- EP-A1- 2 533 172
- WO-A1-2007/076840
- DE-A1- 10 133 184
- US-A1- 2005 039 040
- US-A1- 2006 225 142
- US-A1- 2009 254 791

## Beschreibung

### Gebiet der Erfindung

Die Erfindung betrifft eine Datenverarbeitungseinrichtung und ein Verfahren zum Betrieb einer Datenverarbeitungseinrichtung, insbesondere zum betreibersicheren Betrieb einer Datenverarbeitungseinrichtung.

### Hintergrund der Erfindung

Die Sicherstellung der Vertraulichkeit von Daten, die in einem Datenverarbeitungssystem verarbeitet werden, stellt neben den Anforderungen an die Verfügbarkeit des Systems und die Integrität der Daten eine Wesentliche Anforderung an das System dar. Insbesondere im Umfeld von Cloud Computing ist die zumeist berechtigte Sorge, Daten könnten veruntreut werden, für viele potentielle Nutzer ein Grund auf diese Lösung zu verzichten.

Bei derzeit üblichen Datenverarbeitungssystemen kommt es häufig vor, dass teilweise hochsensible Daten in falsche Hände geraten. Hierbei lassen sich folgende Gefährdungskategorien unterscheiden:
- Angriffe von "außen" durch unautorisierte physische Zugriffe;
- Angriffe von "außen" durch Hackerangriffe; und
- Angriffe von "innen", etwa durch den Betreiber des Datenverarbeitungssystems, durch die verwendeten Software-Dienste, durch Entwickler der verwendeten Hardware- und/oder Software-Komponenten.

Um Angriffen von "außen" entgegenzuwirken werden üblicherweise technische Verfahren verwendet, etwa spezielle Zugangssysteme, die einen unerlaubten Zugang bzw. Zugriff auf Systeme, in denen sensible Daten verarbeitet werden, einschränken oder verhindern. Durch eine konsequente Nutzung von Firewalls, Passwortverfahren, etc. kann Angriffen von "außen" zusätzlich entgegengewirkt werden.

Während Angriffen von "außen" also verhältnismäßig gut entgegengewirkt werden kann, sind Angriffe von "innen" bei den heute eingesetzten Datenverarbeitungssystemen nicht oder nur mit erheblichen Aufwand beherrschbar, da Personen beteiligt sind, die aufgrund ihrer Aufgaben (etwa bei der Wartung und dem Betrieb der Systeme) Zugang zu diesen Systemen erhalten müssen oder aufgrund ihrer Rolle bei der Realisierung der Zugangssteuerungssysteme prinzipiell in der Lage wären, diese zu manipulieren. Der Schwachpunkt liegt hier also im Faktor "Mensch", da es grundsätzlich möglich ist, dass durch vorsätzliche oder fahrlässige Aktionen der handelnden Personen Daten veruntreut werden. Daraus ergibt sich zwangsläufig, dass technische Verfahren immer mit organisatorischen Maßnahmen gekoppelt werden müssen (beispielsweise eine besondere Sorgfalt bei der Auswahl des Personals, Vier-Augen-Prinzip, usw.), um wirksam zu sein, wobei naturgemäß organisatorische Maßnahmen eine erheblich geringere Wirksamkeit aufweisen. Kriminelle und fehlerhafte Handlungen der involvierten Personen, Erpressung und Bestechung können niemals ausgeschlossen werden und stellen daher stets eine latente Bedrohung für die Sicherstellung der Datenvertraulichkeit dar.

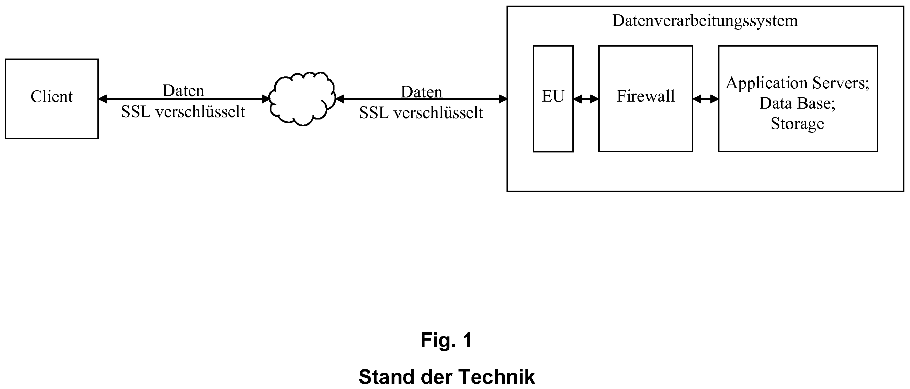

**Fig. 1** zeigt ein aus dem Stand der Technik bekanntes Datenverarbeitungssystem. Das Datenverarbeitungssystem kann physisch vor einem nicht autorisierten Zugriff geschützt werden, etwa mittels Zutrittskontrollen. Die Kommunikation mit externen Systemen, etwa ein Client, kann über ein gesichertes Kommunikationsnetzwerk unter Zuhilfenahme einer Ver- und Entschlüsselungseinrichtung EU abgewickelt werden, wobei die zu übertragenden selbst verschlüsselt werden können. Der Zugriff von außen auf das Datenverarbeitungssystem kann mittels einer Firewall geschützt werden.

Allerdings hat der Betreiber (z.B. die Mitarbeiter des Betreibers) intern Zugriff auf das Datenverarbeitungssystem, sodass der Betreiber potentiell sämtliche Daten missbrauchen kann.

Relevanter Stand der Technik wird in den Dokumenten DE 1010 33 184 A1 und WO2077/076840 A1 offenbart.

### Aufgabe der Erfindung

Aufgabe der vorliegenden Erfindung ist es daher, Lösungen bereit zu stellen, bei denen durch technische Maßnahmen ein hoher Grad an Datenvertraulichkeit sichergestellt werden kann und auf organisatorische Maßnahmen weitgehend verzichtet werden kann.

### Erfindungsgemäße Lösung

Der Gegenstand der Erfindung wird durch die unabhängigen Ansprüche 1 (System) und 8 (Verfahren) definiert. Weitere Ausführungsformen sind in den abhängigen Ansprüchen enthalten.

### Kurzbeschreibung der Figuren

Einzelheiten und Merkmale der Erfindung sowie konkrete Ausgestaltungen der Erfindung ergeben sich aus der nachfolgenden Beschreibung in Verbindung mit der Zeichnung. Es zeigt:
- Fig. 1: ein aus dem Stand der Technik bekanntes System zur Verarbeitung von Daten;
- Fig. 2: ein Blockdiagramm eines erfindungsgemäßen Systems zum betreibersicheren Verarbeiten von Daten;
- Fig. 3: eine konkretes Beispiel eines erfindungsgemäßen Systems zum betreibersicheren Verarbeiten von Daten; und
- Fig. 4: die in einem erfindungsgemäßen System in den jeweiligen Bereichen verwendeten Speichersysteme.

### Detaillierte Beschreibung der Erfindung

Erfindungsgemäß wird ein Datenverarbeitungssystem bereitgestellt, das derart strukturiert ist, dass eine Trennung der Einheiten bzw. Bereiche, in denen verschlüsselte und unverschlüsselte Daten vorliegen, vorgenommen wird.

Das erfindungsgemäße Verfahren und das erfindungsgemäße System haben damit den Vorteil, mit geringem Aufwand eine erhebliche Verbesserung der Datenvertraulichkeit zu erreichen und dabei gleichzeitig die aus dem Stand der Technik bekannten organisatorischen Maßnahmen erheblich zu reduzieren, sodass der Faktor "Mensch" nahezu vollständig ausgeschalten wird. Die Daten können dadurch "betreibersicher" verarbeitet werden. "Betreibersicher" bedeutet, dass auch der Betreiber (bzw. seine Mitarbeiter) keinen Zugriff auf unverschlüsselte Daten im System erhalten bzw. dass ein Zugriff auf unverschlüsselte Daten im System durch den Betreiber weitgehend ausgeschlossen ist.

Dem erfindungsgemäßen Verfahren und dem erfindungsgemäßen System liegt der Ansatz zugrunde, dass das Daten verarbeitende System mittels technischer Maßnahmen jederzeit sicherstellt, dass ein Zugriff auf Daten in unverschlüsselter Form ausgeschlossen ist.

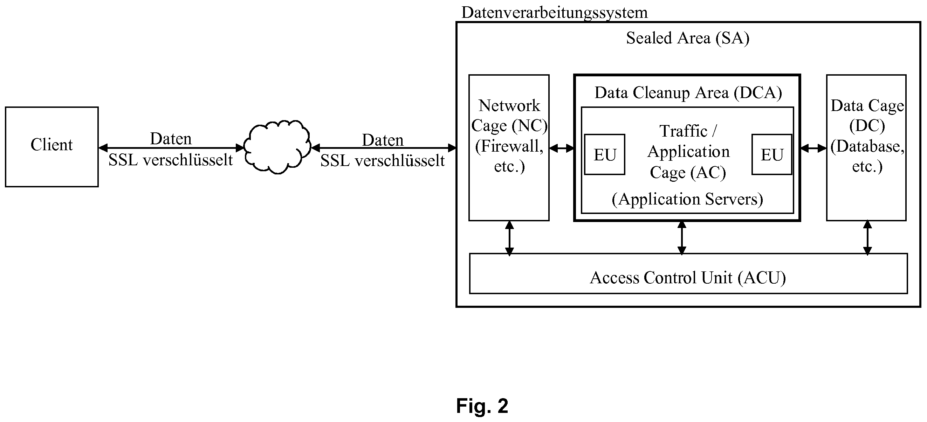

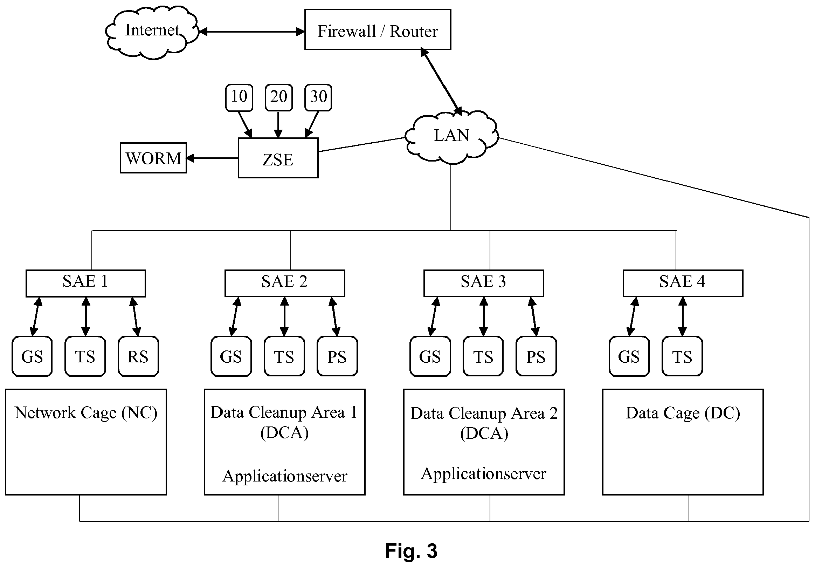

**Fig. 2** zeigt ein Blockdiagramm einer erfindungsgemäß strukturierten Datenverarbeitungseinrichtung, mit der die Daten "betreibersicher" verarbeitet werden können. Erfindungsgemäß wird damit die Vertraulichkeit der Daten auch gegenüber Angriffen von "innen", also gegenüber Angriffen durch den Betreiber des Systems, gewährleistet. **Fig. 3** zeigt eine konkretes Beispiel eines erfindungsgemäßen Systems zum betreibersicheren Verarbeiten von Daten, das entsprechend der in Fig. 2 gezeigten Form strukturiert ist.

Um das System betreibersicher auszugestalten sind folgende Maßnahmen vorgesehen, wobei diese Maßnahmen einzeln vorgesehen werden können oder miteinander kombiniert werden können:
- Bereitstellen einer "Sealed Area" SA mit spezifischer Zugangssteuerung ACU;
- Trennen der funktionalen Einheiten des Datenverarbeitungssystems in Netzwerkbereiche NC (Network Cage), Verarbeitungsbereiche AC (Traffic / Application Cage) und Speicherbereiche DC (Data Cage); und
- Bereitstellen spezifischen Bereichen DCA, in denen die Verarbeitung unverschlüsselter Daten stattfindet (Data Cleanup Area).

Nachfolgend wird unter Bezugnahme auf Fig. 2 und Fig. 3 im Einzelnen auf die Eigenschaften und die technische Realisierung der vorstehend genannten Bereiche eingegangen. Die Beschreibung erfolgt hierbei anhand eines Datenverarbeitungssystems, das aus einem Elektronikschrank ("Rack") mit vier Untereinheiten ("Cage") besteht, wie beispielsweise in Fig. 3 gezeigt. Das in Fig. 3 gezeigte Beispiel ist lediglich als Implementierungsbeispiel zu verstehen und stellt keine Einschränkung, insbesondere bezüglich der Größe und Skalierbarkeit des Systems, dar.

Das gesamte Datenverarbeitungssystem wird innerhalb einer "Sealed Area" SA implementiert. Mit "Sealed Area" wird eine gesicherte Umgebung bzw. versiegelte Infrastruktur bezeichnet.

Das Datenverarbeitungssystem wird durch eine Firewall und/oder Router an das öffentliche Internet angebunden, wodurch die notwendigen restriktiven Regeln für die Erreichbarkeit interner Komponenten der Datenverarbeitungseinrichtung sichergestellt werden.

Intern kommunizieren die Komponenten des Systems, insbesondere der Netzwerkbereich NC, die Verarbeitungsbereiche AC bzw. die Data Cleanup Area DCA und der Speicherbereich DC über ein privates LAN (Local Area Network) oder über ein anderes dafür geeignetes Kommunikationsnetzwerk. Die Verarbeitungsbereiche AC sind hierbei in Data Cleanup Areas lokalisiert, wobei in einer Data Cleanup Area mehrere Verarbeitungsbereiche AC angeordnet sein können. Es können mehrere Netzwerkbereiche NC und/oder mehrere Speicherbereiche DC vorgesehen sein.

Die Data Cleanup Area ist erfindungsgemäß so ausgestaltet, dass bei einem unberechtigten Zugang zur Data Cleanup Area sämtliche dort gespeicherten Daten, insbesondere die unverschlüsselt gespeicherten Daten gelöscht werden

Der Netzwerkbereich NC ist hier über ein Kommunikationsnetzwerk mit den Verarbeitungsbereichen AC gekoppelt. Der Speicherbereich DC ist ebenfalls über ein Kommunikationsnetzwerk mit den Verarbeitungsbereichen AC gekoppelt.

Der Verarbeitungsbereich AC (bzw. die Verarbeitungsbereiche) weist zumindest eine Encryption Unit EU auf. Die Encryption Unit EU ist vorgesehen, um den Datenverkehr zwischen dem Netzwerkbereich NC und dem Verarbeitungsbereich AC und zwischen dem Speicherbereich DC und dem Verarbeitungsbereich AC zu verschlüsseln und/oder zu entschlüsseln. Erfindungsgemäß ist es vorgesehen, dass Daten ausschließlich in dem Verarbeitungsbereichen AC in unverschlüsselter Form vorliegen. Außerhalb des Verarbeitungsbereiches AC, d.h., im Netzwerkbereich NC und im Speicherbereich DC liegen die Daten ausschließlich in verschlüsselter Form vor. Damit ist sichergestellt, dass die Daten im Speicherbereich DC und im Netzwerkbereich NC selbst bei einer Kompromittierung des Speicherbereiches DC und/oder des Netzwerkbereiches NC für den Angreifer nahezu wertlos sind.

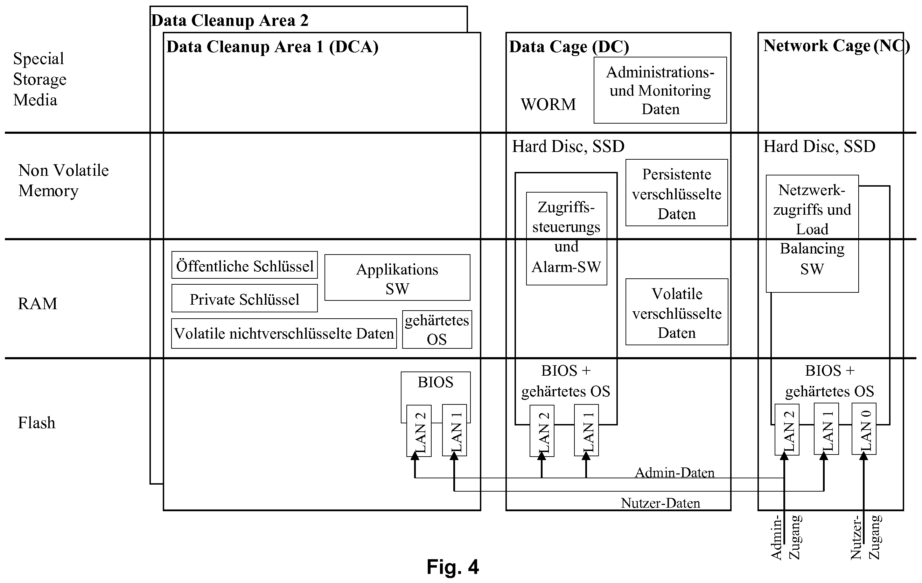

Ein weiterer wesentlicher Aspekt der Erfindung neben der strukturellen Implementierung (Trennung der Datenverarbeitungseinrichtung in die Bereiche Netzwerkbereiche NC, Verarbeitungsbereiche AC und Speicherbereiche DC) ist die Zugriffssteuerung, die zusammen mit dem zugrundeliegenden Speicherlayout, das mit Bezug auf Fig. 4 näher beschrieben wird, sicherstellt, dass in keinem Fall, also auch nicht bei unbefugtem Eindringen in das System oder bei Wartungsaktivitäten, ein Zugriff auf unverschlüsselte Daten möglich ist.

Die Zugriffssteuerung umfasst im Wesentlichen eine Zugriffssteuerungseinheit ZSE, die als zentrale Zugriffssteuerungseinheit ausgestaltet sein kann, und periphere Sensor-/Aktor-Einheiten SAE. Jedem Bereich (Netzwerkbereiche NC, Verarbeitungsbereiche AC und Speicherbereiche DC) kann eine Sensor-/Aktor-Einheiten SAE zugeordnet sein, wie in Fig. 3 gezeigt.

Alternativ kann eine Sensor-/Aktor-Einheiten SAE auch mehreren Bereichen zugeordnet sein. So kann eine Sensor-/Aktor-Einheiten SAE beispielsweise auch mehreren Speicherbereichen DC zugeordnet sein.

Jede Sensor-/Aktor-Einheiten SAE ist mit mindestens einem peripheren Aktor und Sensor gekoppelt. Bei dem in Fig. 3 gezeigten Beispiel sind die Sensor-/Aktor-Einheiten SAE 1 bis SAE 4 mit jeweils mindestens zwei Sensoren bzw. Aktoren gekoppelt.

Die Sensoren/Aktoren umfassen hier Griffsteuerungen GS einschließlich der damit verbundenen mechanischen und elektro-mechanischen Komponenten, Türsensoren TS, Racksensoren RS und Power Switches PS. Die Kommunikation zwischen einer Sensor-/Aktor-Einheit SAE und den jeweiligen Aktoren und/oder Sensoren erfolgt vorzugsweise über ein serielles Interface, z.B. CAN-Bus.

Die Implementierung der Sensor-/Aktor-Einheiten SAE kann mit handelsüblichen Mikrokontroller-Einheiten erfolgen. Die Zugriffssteuerungseinheit ZSE kann durch einen handelsüblichen Server realisiert werden.

Die Zugriffssteuerungseinheit ZSE steuert, vorzugsweise zentral, die Zugriffe auf die Komponenten des Datenverarbeitungssystems. Sie implementiert vorzugsweise auch die Logik zur Steuerung der Sensor-/Aktor-Einheiten SAE und der damit gekoppelten Sensoren/Aktoren, wodurch der Status des Datenverarbeitungssystems überwacht wird und Zugriffsberechtigungen umgesetzt werden.

Die von den Sensoren erkannten Betriebszustände des Datenverarbeitungssystems und/oder die Aktionen der Aktoren werden aufgezeichnet und können zum Einen in einem, vorzugsweise forensisch auswertbaren, Speicher dokumentiert werden und zum Anderen an eine Leitstelle weitergeleitet werden, wodurch notwendige Meldungen an ein Wartungspersonal gemeldet werden und gegebenenfalls notwendige Aktivitäten eingeleitet werden können. Als Speicher zum Speichern der Sensordaten und/oder Aktivitäten ist vorzugsweise ein WORM-Speicher (write once read many) vorgesehen.

Daneben sind optische und akustische Ausgaben, ebenso wie die Möglichkeit der Auswertung von Videodaten vorgesehen. Zu diesem Zweck kann die Zugriffssteuerungseinheit ZSE mit einer Videokamera 20 und/oder mit optischen und/oder akustischen Alarmindikatoren 30 gekoppelt sein.

Die Freigabe von Zugriffen auf die einzelnen Bereiche wird hier durch Freigabe-Tickets initiiert. Die Freigabe-Tickets können von einem mobilen Endgerät 10 an die Zugriffssteuerungseinheit ZSE übertragen werden. Vorzugsweise erfolgt die Übertragung des Freigabe-Tickets über eine Bluetooth-Schnittstelle.

Wie vorstehend erläutert, kann für jeden Bereich eine Sensor-/Aktor-Einheit SAE vorgesehen sein (wie in Fig. 3 gezeigt). Sensor-/Aktor-Einheiten SAE stellen die Schnittstelle zwischen der (gegebenenfalls zentralen) Zugriffssteuerungseinheit ZSE und den Aktoren und/oder Sensoren GS, TS, RS, PS dar. Die Sensor-/Aktor-Einheiten SAE sind jeweils angepasst eigenständig sicherzustellen, dass im Falle eines Ausfalls der Zugriffssteuerungseinheit ZSE oder bei Kommunikationsproblemen zwischen der Sensor-/Aktor-Einheit SAE und der Zugriffssteuerungseinheit ZSE die betroffenen Bereiche in einen sicherheitstechnisch vordefinierten bzw. vorbestimmten sicheren Zustand geschaltet werden.

Die Griffsteuerungen GS werden zum Öffnen und Schließen von Türen der einzelnen Bereiche sowie zur Bedienung der zugehörigen Schlösser verwendet. Die Schlösser der Griffsteuerungen GS enthalten keine klassischen Authentisierungsmechanismen wie Schlüsselzylinder oder Zahleneingabefelder, sondern werden ausschließlich über Freigabe- und Schließaufträge der Zugriffssteuerungseinheit ZSE gesteuert. Die Stati der Griffsteuerungen GS "Schloss freigegeben und Griff geschlossen", "Schloss freigegeben und Griff geöffnet", "Schloss gesperrt und Griff geschlossen" und "Schloss gesperrt und Griff geöffnet" werden über entsprechende Sensoren detektiert und an die Zugriffssteuerungseinheit ZSE gemeldet, die diese in geeigneter Weise auswerten kann. Der Status "Schloss gesperrt und Griff geöffnet" indiziert typischerweise einen unbefugten, gewaltsamen Zugriff und kann beispielsweise zur Deaktivierung des entsprechenden Bereiches genutzt werden.

Die Türsensoren TS werden zur Indikation der Türstati "offen" und "geschlossen" verwendet. Sie können beispielsweise auf mechanischen, magnetischen oder infrarot-basierten Verfahren beruhen. Zusammen mit anderen Sensoren können Systemzustände ermittelt und gegebenenfalls geeignete Aktionen eingeleitet werden. Beispielsweise stellt der Zustand "Griff gesperrt" und "Tür wird geöffnet" einen unautorisierten Zugriff dar.

Die Racksensoren RS können zunächst in gleicher Ausprägung wie Türsensoren TS dazu verwendet werden beispielsweise ein unbefugte Demontage von Rack-Teilen (Seitenteile, Abdeckung, usw.) zu erkennen. Darüber hinaus können weitere Sensoren, etwa Beschleunigungssensoren eingesetzt werden, um beispielsweise Vandalismus oder nicht autorisiertes Hantieren am System festzustellen oder durch Infrarotstrecken das Einbringen von invasiven Gegenständen etc. zu signalisieren.

Ein Wesentlicher Bestandteil des erfindungsgemäßen Systems sind die Power Switches PS. Die Power Switches PS sind vorgesehen, um einzelne Komponenten, ein komplettes Rack oder einen gesamten Bereich mit Strom zu versorgen bzw. stromlos zu schalten. Erfindungsgemäß sind die Power Switches PS so angepasst, dass sie bei einer Unterbrechung der Signalisierung zur zugehörigen Sensor-/Aktor-Einheit SAE die jeweilige Komponente in den Zustand "stromlos" bringen. So kann bei einer Unterbrechung der Signalisierung beispielsweise die Stromversorgung für einen gesamten Bereich unterbrochen werden.

Erfindungsgemäß ist es vorgesehen, dass zumindest jede Data Cleanup Area DCA bzw. jeder Verarbeitungsbereich AC einen eigenen Power Switch PS aufweist. Es können damit mehrere Verarbeitungsbereiche AC realisiert werden, die unabhängig voneinander "stromlos" geschaltet werden können. Beispielsweise können zwei Verarbeitungsbereiche AC vorgesehen werden, wobei einer der beiden Verarbeitungsbereiche AC als Backup für den jeweils anderen Verarbeitungsbereich AC dient. Wie einer der beiden Verarbeitungsbereiche AC kompromittiert kann dieser Verarbeitungsbereich stromlos geschaltet werden und der andere Verarbeitungsbereich AC kann die Aufgabe des kompromittierten Verarbeitungsbereiches AC übernehmen. Damit wird zusätzlich die Ausfallsicherheit, insbesondere bei einem Angriff von innen, erhöht - das Gesamtsystem bleibt so auch nach einem Angriff auf einen Verarbeitungsbereich AC nutzbar. Dies gilt auch für beiden anderen Bereiche NC und DC.

Ein weiteres Wesentliches Merkmal eines erfindungsgemäßen betreibersicheren Systems ist die Verwendung der Speichersysteme in den jeweiligen Bereichen DCA, DC und NC. Mit Bezug auf Fig. 4 wird dies näher beschrieben.

**Fig. 4** zeigt die in einem erfindungsgemäßen System in den jeweiligen Bereichen verwendeten Speichersysteme.

Gezeigt sind hier in schematischer Form die vier Bereiche Speicherbereich DC, Netzwerkbereich NC und zwei Data Cleanup Areas DCA. In den horizontalen Schichten ist schematisch dargestellt, welche Speichermedien bzw. Speichersysteme für die jeweiligen funktionalen Einheiten erfindungsgemäß verwendet werden.

Im Netzwerkbereich NC befinden sich alle Komponenten, die zur Kommunikation nach außen, etwa mit einem Client, notwendig sind. Dabei ist neben einer logischen auch eine physikalische Trennung von Netzen, über die Nutzerdaten übertragen werden, von jenen Netzen, die zu administrativen Aufgaben verwendet werden, vorteilhaft. Dadurch kann insbesondere eine eindeutige Trennung von Zugriffsmöglichkeiten gewährleistet werden.

Alle Komponenten enthalten ein gehärtetes Betriebssystem OS, das nur die für den jeweiligen Einsatz notwendigen Interfaces zulässt. Bei dem in Fig. 4 gezeigten Beispiel sind nur die Netzwerk-Interfaces LAN 0, LAN 1 und LAN 2 zugelassen. Andere Interfaces (z.B. USB) sind inaktiv geschaltet und können vorzugsweise auch nicht aktiviert werden. Dies erlaubt den Einsatz standardisierter Hardware-Komponenten, ohne dabei Abstriche bezüglich der Datensicherheit machen zu müssen.

Das Betriebssystem OS befindet sich im laufenden Betrieb des Systems sowohl im Flash- und den HDD/SSD-Speichern als auch im RAM. Die Netzwerkbereich spezifische Software, beispielsweise für das Load-Balancing und für das Netzwerk-Management befindet in den HDD/SSD und in den RAM-Bereichen.

Wesentlich für die Erfindung ist, dass Netzwerkbereich NC bezüglich der Nutzerdaten eine reine "Transfereinheit" darstellt, d.h. verschlüsselte Nutzerdaten werden im Netzwerkbereich NC nicht entschlüsselt und können mangels Kenntnis des hierfür erforderlichen privaten Schlüssels auch nicht entschlüsselt werden.

In den Data Cleanup Areas DCA bzw. in den Verarbeitungsbereichen AC wird mit Hilfe der Applikationssoftware die eigentliche Verarbeitung der Nutzerdaten vorgenommen.

Die vom Netzwerkbereich NC ankommenden verschlüsselten Daten werden in der jeweiligen Data Cleanup Area DCA bzw. in dem jeweiligen Verarbeitungsbereich AC entschlüsselt und vor der Übertragung an den Netzwerkbereich NC wieder verschlüsselt. Durch ein geeignetes Schlüsselmanagement wird sichergestellt, dass die für die Ent- und Verschlüsselung notwendigen Schlüssel (öffentliche Schlüssel zum Verschlüsseln und private Schlüssel zum Entschlüsseln) nur in der Data Cleanup Area DCA bzw. in dem Verarbeitungsbereich AC unverschlüsselt vorliegen.

Analog gilt das für das Ver- und Entschlüsseln Gesagte auch für Daten die zwischen dem Speicherbereich DC und dem Verarbeitungsbereich AC übertragen werden.

Unverschlüsselte Daten liegen damit ausschließlich im Verarbeitungsbereich AC bzw. in der Data Cleanup Area DCA vor.

Erfindungsgemäß zeichnet sich der Verarbeitungsbereich AC bzw. die Data Cleanup Area DCA insbesondere dadurch aus, dass keine persistenten Speichermedien vorhanden sind. Durch diese Maßnahme wird erreicht, dass bei einer Unterbrechung der Stromversorgung der Data Cleanup Area DCA bzw. des Verarbeitungsbereiches AC
- keine unverschlüsselten Daten die Data Cleanup Area DCA bzw. den Verarbeitungsbereich AC verlassen können, und
- keine Daten mehr in der Data Cleanup Area DCA bzw. in dem Verarbeitungsbereich AC vorliegen,
da ausschließlich volatile Speichertypen bzw. Speichermedien eingesetzt werden.

In der Data Cleanup Area DCA verwendete Komponenten enthalten softwareseitig lediglich eine Boot/Netboot-Software, die es erlaubt, das Betriebssystem und die Applikations-Software aus dem Netzwerkbereich NC zu laden.

Um sicherzustellen, dass durch Manipulationen, etwa bei Wartungsarbeiten, persistente Speicher eingebracht werden, was das Sicherheitskonzept aushebeln würde, wird beim Hochfahren (Starten bzw. Booten) der Komponenten der Data Cleanup Area DCA jeweils ein Fingerprintvergleich durchgeführt, bei dem ein Fingerprint der zu ladenden Software mit einem Fingerprint des mit dieser Software zu ladenden Geräts verglichen wird. Sollte beispielsweise eine Hardwarekomponente manipuliert worden sein, würde der Fingerprint dieser Hardwarekomponente nicht mehr mit dem Fingerprint der Software zusammenpassen, sodass diese Hardwarekomponente nicht geladen wird. Ein solcher Zustand kann dem Wartungspersonal gemeldet werden. Zusätzlich oder alternativ kann es vorgesehen sein, dass in einem solchen Fall ein Hochfahren der gesamten Data Cleanup Area DCA verhindert wird.

In den Data Cleanup Area DCA wird ferner ein gehärtetes Betriebssystem OS verwendet. Das gehärtete Betriebssystem ist angepasst, die Verwendung persistenter Speichermedien zu verhindern.

Um zu verhindern, dass etwa durch logische Zugriffe über das Netzwerk unverschlüsselte Daten ausgelesen werden können, werden logische Zugriffe (z.B. ssh-Login) auf Server in der Data Cleanup Area DCA grundsätzlich unterbunden.

Bezüglich des Betriebssystems und der physikalischen Interfaces gilt für den Speicherbereich DC das für den Netzwerkbereich NC Beschriebene entsprechend. Im Speicherbereich DC werden Datenbank und Massenspeicher untergebracht, die dem Konzept entsprechend ausschließlich verschlüsselte Daten enthalten. In einer Ausgestaltung der Erfindung kann der Speicherbereich DC auch die Daten der Zugriffssteuerungseinheit ZSE speichern.

Erfindungsgemäß wird der Ablauf bei autorisierten Zugriffen, etwa bei Wartungstätigkeiten, folgendermaßen realisiert:
Ein Zugangsticket, das zeitlich befristet und/oder für einen oder mehrere Bereiche ausgestellt werden kann, wird mit einem geeigneten Verfahren generiert bzw. erzeugt. Das erzeugte Zugangsticket wird anschließend an ein Endgerät, etwa ein Mobiltelefon, des beauftragten Wartungstechnikers übertragen. Das Zugangsticket kann verschlüsselt übertragen werden und beispielsweise nur mit einem privaten Schlüssel des beauftragten Wartungstechnikers entschlüsselt werden. Dadurch wird vermieden, dass ein abgefangenes Zugangsticket missbraucht werden kann. Der beauftragten Wartungstechniker überträgt das Zugangsticket an die Zugriffssteuerungseinheit ZSE. Die Zugriffssteuerungseinheit ZSE erkennt anhand der übertragenen Daten die Gültigkeit des Tickets. Der Startzeitpunkt für die Gültigkeitsdauer kann etwa der Übertragungszeitpunkt sein, an dem das Ticket an die Zugriffssteuerungseinheit ZSE übertragen wird. Die Übertragung des Tickets an die Zugriffssteuerungseinheit ZSE kann etwa mittels Bluetooth bewerkstelligt werden. Durch eine entsprechende Echtzeituhr und geeignete Software funktioniert dieses Verfahren auch dann, wenn die Zugriffssteuerungseinheit ZSE nicht mit dem öffentlichen Netz verbunden ist.

Nach einer erfolgreichen Auswertung bzw. Überprüfung des empfangenen Tickets weist die Zugriffssteuerungseinheit ZSE die betroffene Griffsteuerung GS an die entsprechende Tür zu öffnen, so dass ein physischer Zugriff auf den jeweiligen Bereich möglich ist. Nach dem Schließen der entsprechenden Tür findet eine automatische Verriegelung statt.

Vorteilhaft ist es, wenn das Ticket nach Übertragung an die Zugriffssteuerungseinheit ZSE ungültig wird und somit kein zweites Mal verwendet werden kann.

Im Falle eines gewünschten Zugriffs auf die Data Cleanup Area DCA bzw. auf den Verarbeitungsbereich AC wird erfindungsgemäß vor der Freigabe des Schlosses durch die Griffsteuerung GS die Data Cleanup Area DCA bzw. der Verarbeitungsbereich AC durch den Power Switch PS stromlos geschaltet, d.h. die Stromversorgung sämtlicher Komponenten (Server, etc.) der Data Cleanup Area DCA bzw. des Verarbeitungsbereiches AC wird unterbrochen. Die Freigabe des Schlosses durch die Griffsteuerung GS erfolgt erst nach einer vorbestimmten Zeitspanne nach der Unterbrechung der Stromversorgung. Diese vorbestimmte Zeitspanne ist so zu wählen, dass gewährleistet ist, dass die in den volatilen Speichersystemen der Data Cleanup Area DCA bzw. des Verarbeitungsbereiches AC befindlichen Daten nicht mehr verwertbar sind. Beispielsweise kann die vorbestimmte Zeitspanne 15 Sekunden oder mehr betragen. Je nach Art der verwendeten volatilen Speichersysteme kann die vorbestimmte Zeitspanne auch weniger als 15 Sekunden betragen. Damit ist gewährleistet, dass auch eine autorisierte Person (etwa ein Wartungsmitarbeiter) nicht an unverschlüsselte Daten gelangen kann.

Die Zugriffe auf den Netzwerkbereich NC und den Speicherbereich DC werden wie mit Bezug auf die Data Cleanup Area DCA bzw. den Verarbeitungsbereich AC beschreiben gesteuert. Jedoch muss hierbei nicht zwingend eine Unterbrechung der Stromversorgung durchgeführt werden, weil die Daten ohnehin nur in verschlüsselter Form vorliegen.

Ein nicht autorisierter Zugriff (beispielsweise bei einem gewaltsamen Aufbrechen von Türen, Demontage von Seitenwänden, etc.) wird von den Sensoren erkannt, aufgezeichnet und an eine Leitwarte gemeldet. Falls hiervon die Data Cleanup Area DCA bzw. der Verarbeitungsbereich AC betroffen ist, wird automatisch und unmittelbar die Unterbrechung der Stromversorgung eingeleitet.

Vorstehend ist die Erfindung anhand eines Beispiels erläutert worden, bei dem das Datenverarbeitungssystem vier Bereiche, nämlich einen Speicherbereich DC, einen Netzwerkbereich NC und zwei Verarbeitungsbereiche AC bzw. zwei Data Cleanup Areas DCA aufweist, die Erfindung kann jedoch auf verschiedenste Realisierungen angewendet werden. So ist die Anzahl der Bereiche nicht auf vier begrenzt, sondern kann beliebig erweitert werden. Beispielsweise können mehrere Speicherbereiche DC, mehrere Netzwerkbereich NC und mehrere Verarbeitungsbereiche AC bzw. Data Cleanup Areas DCA vorgesehen sein. Eine Skalierung nach oben ist jederzeit möglich. Bei der Skalierung nach unten ist zu berücksichtigen, dass mindestens drei unabhängige Bereiche vorhanden sind, nämlich ein Speicherbereich DC, ein Netzwerkbereich NC und ein Verarbeitungsbereich AC bzw. eine Data Cleanup Area DCA.

Die vorstehend beschriebene erfindungsgemäße betreibersichere Datenverarbeitungseinrichtung zeichnet sich zusammengefasst durch folgende technische Merkmale aus:
- Sealed Area SA mit spezifischer Zugriffssteuerung mittels einer Zugriffssteuerungseinheit ZSE, einer oder mehreren Sensor-/Aktor-Einheiten SAE und einer Anzahl von Sensoren/Aktoren je Sensor-/Aktor-Einheiten SAE;
- Trennung der funktionalen Einheiten Data Cleanup Area DCA bzw. Verarbeitungsbereich AC, Netzwerkbereich NC und Speicherbereich DC;
- Durchführen eines Data Cleanup (d.h. Löschen der Daten in den volatilen Speichermedien durch Unterbrechung der Stromversorgung) bei autorisierten und nicht autorisierten Zugriffen;
- Das verwendete Speicherlayout aller Systemkomponenten, insbesondere die Verwendung von ausschließlich volatilen Speichermedien in der Data Cleanup Area DCA bzw. im Verarbeitungsbereich AC;
- Gehärtete Betriebssysteme OS;
- Schlüsselmanagement und Verschlüsselung der Daten beim Verlassen der Data Cleanup Area DCA bzw. des Verarbeitungsbereiches AC;
- Monitoring und Reporting/Speicherung der Betriebszustände;
- Mittels Tickets gesteuerte Schlösser GS;
- Fail - Save bei Ausfall von Komponenten oder Manipulation
- Hardware/Software-Fingerprint-Check bei der Inbetriebnahme der Komponenten, insbesondere der Komponenten der Data Cleanup Area DCA bzw. des Verarbeitungsbereiches AC;

### Bezugszeichen:

- 10: mobiles Endgerät (z.B. Mobiltelefon des Servicetechnikers)
- 20: Videokamera
- 30: optische und akustische Alarmindikatoren
- AC: Application Cage (Verarbeitungsbereich)
- ACU: Access Control Unit
- DC: Data Cage (Speicherbereich)
- DCA: Data Cleanup Area
- EU: Encryption Unit (ver- und entschlüsseln von Daten)
- GS: Griffsteuerung
- NC: Network Cage (Netzwerkbereich)
- PS: Powerswitches (Stromschalter)
- RS: Racksensoren
- SA: Sealed Area
- SAE: Sensor-/Aktor-Einheiten
- TS: Türsensoren
- ZSE: Zugriffssteuerungseinheit

## Patentansprüche

1. System zur Datenverarbeitung, wobei das System umfasst:
- einen Netzwerkbereich (NC), zumindest einen Verarbeitungsbereich (AC) und einen Speicherbereich (DC), wobei der Netzwerkbereich, der Verarbeitungsbereich und der Speicherbereich physikalisch voneinander getrennt sind, wobei
- der Netzwerkbereich und der Verarbeitungsbereich sowie
- der Verarbeitungsbereich und der Speicherbereich jeweils über ein internes Kommunikationsnetzwerk miteinander gekoppelt sind, und
- eine Zugriffssteuerung (ACU), die angepasst ist, einen Zugriff auf den Netzwerkbereich, den Verarbeitungsbereich und den Speicherbereich zu überwachen und zu steuern und einen Zugriff auf unverschlüsselte Daten zu verhindern, und
wobei
- der Netzwerkbereich (NC) angepasst ist, über ein Kommunikationsnetzwerk eine Kommunikation zwischen dem System und einem externen System (Client) abzuwickeln, wobei der Netzwerkbereich weiter angepasst ist, Daten in verschlüsselter Form zu senden und zu empfangen,
- der Speicherbereich (DC) angepasst ist, Daten zu speichern, und
- der Verarbeitungsbereich (AC) angepasst ist, Daten von dem Speicherbereich und/oder von dem Netzwerkbereich zu empfangen, die empfangenen Daten zu verarbeiten und die verarbeiteten Daten an den Speicherbereich und/oder an den Netzwerkbereich zu übertragen
**dadurch gekennzeichnet, dass**
- der Verarbeitungsbereich (AC) ausschließlich volatile Speichermittel aufweist, die unmittelbar nach einer Unterbrechung der Stromversorgung ihren Speicherinhalt verlieren,
- die Zugriffssteuerung (ACU) weiter angepasst ist, Zugriffe auf den Verarbeitungsbereich (AC) zu überwachen und bei einer Detektion eines unberechtigten Zugriffes die Stromversorgung des Verarbeitungsbereiches zu unterbrechen, damit die volatilen Speichermittel des Verarbeitungsbereiches ihren Speicherinhalt verlieren.

2. System nach Anspruch 1, wobei der Verarbeitungsbereich (AC) zumindest eine Verschlüsselungs- und/oder Entschlüsselungseinrichtung (EU) umfasst, wobei die Verschlüsselungs- und/oder Entschlüsselungseinrichtung (EU) angepasst ist,
- die von dem Speicherbereich und/oder von dem Netzwerkbereich empfangenen Daten zu entschlüsseln und
- die an den Speicherbereich und/oder an den Netzwerkbereich zu übertragenden Daten zu verschlüsseln,
wobei die zum Entschlüsseln der Daten benötigten privaten Schlüssel ausschließlich im Verarbeitungsbereich gespeichert sind, sodass die Daten außerhalb des Verarbeitungsbereiches nur in verschlüsselter Form verfügbar sind.

3. System nach einem der vorhergehenden Ansprüche, wobei der Verarbeitungsbereich (AC) weiter angepasst ist, beim Hochfahren der Verschlüsselungs- und/oder Entschlüsselungseinrichtung (EU) für Verschlüsselungs- und/oder Entschlüsselungseinrichtung (EU) einen Fingerprint-Vergleich zwischen einem Hardware-Fingerprint der Verschlüsselungs- und/oder Entschlüsselungseinrichtung (EU) und einem Software-Fingerprint der Software, die die Verschlüsselungs- und/oder Entschlüsselungseinrichtung (EU) starten soll, durchzuführen und die Verschlüsselungs- und/oder Entschlüsselungseinrichtung (EU) nur zu starten, wenn der Hardware-Fingerprint mit dem Software-Fingerprint übereinstimmt.

4. System nach einem der vorhergehenden Ansprüche, wobei die Zugriffssteuerung (ACU) eine Zugriffssteuerungseinheit (ZSE) und eine Anzahl von mit der Zugriffssteuerungseinheit gekoppelten Sensor-/Aktor-Einheiten (SAE) umfasst, wobei jedem Netzwerkbereich (NC), Verarbeitungsbereich (AC) und Speicherbereich (DC) jeweils zumindest eine Sensor-/Aktor-Einheit (SAE) zugeordnet ist, wobei jede Sensor-/Aktor-Einheit (SAE) zumindest einen Sensor und/oder Aktor (GS; TS; RS; PS) aufweist, und wobei die Zugriffssteuerungseinheit (ZSE) angepasst ist, die Sensor-/Aktor-Einheiten (SAE) zu steuern.

5. System nach dem vorhergehenden Anspruch 4, wobei der zumindest eine Sensor und/oder Aktor ausgewählt ist aus der Gruppe zumindest umfassend Griffsteuerung (GS), Powerswitch (PS), Racksensor (RS), Türsensor (TS), und Kombinationen hiervon.

6. System nach einem der beiden vorhergehenden Ansprüche, wobei jede Sensor-/Aktor-Einheit (SAE) angepasst ist, bei einem Ausfall der Zugriffssteuerungseinheit (ZSE) und/oder bei einem Kommunikationsproblem zwischen der Sensor-/Aktor-Einheit und der Zugriffssteuerungseinheit den jeweiligen Bereich (NC; AC; DC) in einen vorbestimmten Zustand zu bringen.

7. System nach einem der vorhergehenden Ansprüche 4 bis 6, wobei die Zugriffssteuerungseinheit (ZSE) mit einer WORM-Speichereinrichtung (write once read many) gekoppelt ist und weiter angepasst ist, die von den Sensoren und/oder Aktoren detektierten Zustände und/oder Aktionen in der WORM-Speichereinrichtung zu speichern.

8. Verfahren zur Verarbeitung von Daten in einem System nach einem der vorhergehenden Ansprüche, wobei
- die zu verarbeitenden Daten in verschlüsselter Form von dem Netzwerkbereich (NC) und/oder von dem Speicherbereich (DC) in den Verarbeitungsbereich (AC) des Systems übertragen werden,
- die in den Verarbeitungsbereich (AC) übertragenen Daten in dem Verarbeitungsbereich entschlüsselt werden, wobei zum Entschlüsseln der Daten ein privater Schlüssel verwendet wird, der ausschließlich im Verarbeitungsbereich speicherbar ist,
- die entschlüsselten Daten ausschließlich im Verarbeitungsbereich (AC) verarbeitet werden,
- die verarbeiteten Daten in dem Verarbeitungsbereich (AC) verschlüsselt werden, und
- die verschlüsselten Daten an den Netzwerkbereich (NC) und/oder an den Speicherbereich (DC) übertragen werden,
**dadurch gekennzeichnet, dass** in dem Verarbeitungsbereich (AC) ausschließlich volatile Speichermittel verwendet werden, wobei die Zugriffssteuerung (ACU) Zugriffe auf den Verarbeitungsbereich überwacht und bei einer Detektion eines unberechtigten Zugriffes die Stromversorgung des Verarbeitungsbereiches unterbricht, damit die volatilen Speichermittel des Verarbeitungsbereiches ihren Speicherinhalt verlieren.

9. Verfahren nach dem vorhergehenden Anspruch, wobei der Verarbeitungsbereich (AC) beim Hochfahren seiner Komponenten für jede Komponente einen Fingerprint-Vergleich zwischen einem Hardware-Fingerprint der Komponente und einem Software-Fingerprint der Software, die die Komponente starten soll, durchführt und die Komponente nur dann startet, wenn der Hardware-Fingerprint mit dem Software-Fingerprint übereinstimmt.

10. Verfahren nach einem der beiden vorhergehenden Ansprüche, wobei die Daten in dem System ausschließlich im Verarbeitungsbereich in entschlüsselter Form vorliegen.

## Claims

1. System for data processing, the system comprising:
- a network area (NC), at least one processing area (AC) and a storage area (DC), the network area, the processing area and the storage area are physically separated from each other,
- the network area and the processing area and
- the processing area and the storage area
are coupled to each other in each case via an internal communication network, and
- an access controller (ACU) which is adapted to monitor and control access to the network area, the processing area and the storage area, and to prevent access to unencrypted data,
wherein
- the network area (NC) is adapted to handle a communication between the system and an external system (client) via a communication network, wherein the network area is further adapted to send and receive data in encrypted form,
- the storage area (DC) is adapted to store data, and
- the processing area (AC) is adapted to receive data from the storage area and/or from the network area, to process the received data and to transmit the processed data to the storage area and/or to the network area,
**characterized in that**
- the processing area (AC) exclusively has volatile storage means which lose their stored content immediately after an interruption to the power supply,
- the access controller (ACU) is further adapted to monitor access to the processing area (AC) and upon a detection of an unauthorized access, to interrupt the power supply of the processing area, such that the volatile memory means of the processing area lose their stored contents.

2. System according to claim 1, wherein the processing area (AC) comprises at least one encryption and/or decryption device (EU), wherein the encryption and/or decryption device (EU) is adapted
- to decrypt the data received from the storage area and/or from the network area and
- to encrypt the data to be transmitted to the storage area and/or to the network area,
wherein the private keys required to decrypt the data are stored exclusively in the processing area such that the data outside the processing area are only available in encrypted form.

3. System according to either of the preceding claims, wherein the processing area (AC) is further adapted, when starting up the encryption and/or decryption device (EU), to perform, for the encryption and/or decryption device (EU), a fingerprint comparison between a hardware fingerprint of the encryption and/or decryption device (EU) and a software fingerprint of the software which is intended to start the encryption and/or decryption device (EU), and to start the encryption and/or decryption device (EU) only if the hardware fingerprint matches the software fingerprint.

4. System according to any of the preceding claims, wherein the access controller (ACU) comprises an access control unit (ZSE) and a number of sensor/actor units (SAE) which are coupled to the access control unit, wherein each network area (NC), processing area (AC) and storage area (DC) is assigned at least one sensor/actor unit (SAE), wherein each sensor/actor unit (SAE) has at least one sensor and/or actor (GS; TS; RS; PS), and wherein the access control unit (ZSE) is adapted to control the sensor/actor units (SAE).

5. System according to the preceding claim 4, wherein the at least one sensor and/or actor is selected from the group comprising at least grip controller (GS), power switch (PS), rack sensor (RS), door sensor (TS), and combinations thereof.

6. System according to either of the two preceding claims, wherein each sensor/actor unit (SAE) is adapted to bring the respective area (NC; AC; DC) into a predetermined state in the event of a failure of the access control unit (ZSE) and/or in the event of a communication problem between the sensor/actor unit and the access control unit.

7. System according to any of the preceding claims 4 to 6, wherein the access control unit (ZSE) is coupled to a WORM storage device (write once read many) and is further adapted to store the states and/or actions detected by the sensors and/or actors in the WORM storage device.

8. Method for processing data in a system according to any of the preceding claims,
wherein
- the data to be processed is transmitted in encrypted form from the network area (NC) and/or from the storage area (DC) to the processing area (AC) of the system,
- the data transmitted to the processing area (AC) is decrypted in the processing area, a private key is used to decrypt the data, wherein the private key is exclusively stored in the processing area,
- the decrypted data is processed exclusively in the processing area (AC),
- the processed data is encrypted in the processing area (AC), and
- the encrypted data is transmitted to the network area (NC) and/or to the storage area (DC),
**characterized in that** only volatile storage means are used in the processing area (AC), the access controller (ACU) monitors access to the processing area and interrupts the power supply to the processing area when unauthorized access is detected such that the volatile storage means of the processing area lose their memory contents.

9. Method according to the preceding claim, wherein, when starting up its components, the processing area (AC) performs, for each component, a fingerprint comparison between a hardware fingerprint of the component and a software fingerprint of the software which is intended to start the component, and the component only then starts if the hardware fingerprint matches the software fingerprint.

10. Method according to either of the two preceding claims, wherein the data in the system are only available in decrypted form in the processing area.

## Revendications

1. Système de traitement de données, le système comprenant :
- une zone réseau (NC), au moins une zone de traitement (AC) et une zone de stockage (DC), la zone réseau, la zone de traitement et la zone de stockage étant séparées physiquement les unes des autres,
- la zone réseau et la zone de traitement ainsi que
- la zone de traitement et la zone de stockage
étant couplées les unes aux autres respectivement par l'intermédiaire d'un réseau de communication interne, et
- une commande d'accès (ACU) qui est adaptée pour surveiller et commander un accès à la zone réseau, à la zone de traitement et à la zone de stockage et pour empêcher un accès à des données non chiffrées, et
dans lequel
- la zone réseau (NC) est adaptée pour gérer une communication entre le système et un système externe (client) par l'intermédiaire d'un réseau de communication, la zone réseau étant en outre adaptée pour envoyer et recevoir des données sous forme chiffrée,
- la zone de stockage (DC) est adaptée pour stocker des données, et
- la zone de traitement (AC) est adaptée pour recevoir des données de la zone de stockage et/ou de la zone réseau, pour traiter les données reçues et pour transmettre les données traitées à la zone de stockage et/ou à la zone réseau
**caractérisé en ce que**
- la zone de traitement (AC) ne dispose que de moyens de stockage volatils qui perdent leur contenu de mémoire immédiatement après une interruption de l'alimentation électrique,
- la commande d'accès (ACU) est en outre adaptée pour surveiller des accès à la zone de traitement (AC) et pour interrompre l'alimentation électrique de la zone de traitement lorsqu'un accès non autorisé est détecté, de sorte que les moyens de stockage volatils de la zone de traitement perdent leur contenu de mémoire.

2. Système selon la revendication 1, dans lequel la zone de traitement (AC) comprend au moins un dispositif de chiffrement et/ou de déchiffrement (EU), le dispositif de chiffrement et/ou de déchiffrement (EU) étant adapté pour
- déchiffrer les données reçues de la zone de stockage et/ou de la zone réseau, et
- chiffrer les données à transmettre à la zone de stockage et/ou à la zone réseau, les clés de chiffrement privées requises pour déchiffrer les données n'étant stockées que dans la zone de traitement, de sorte que les données en dehors de la zone de traitement ne sont disponibles que sous forme chiffrée.

3. Système selon l'une des revendications précédentes, dans lequel la zone de traitement (AC) est en outre adaptée, lors du démarrage du dispositif de chiffrement et/ou de déchiffrement (EU), pour effectuer une comparaison d'empreintes digitales, pour le dispositif de chiffrement et/ou de déchiffrement (EU), entre une empreinte digitale matérielle du dispositif de chiffrement et/ou de déchiffrement (UE) et une empreinte digitale logicielle du logiciel qui doit démarrer le dispositif de chiffrement et/ou de déchiffrement (UE), et pour ne démarrer le dispositif de chiffrement et/ou de déchiffrement (UE) que si l'empreinte digitale matérielle correspond à l'empreinte digitale logicielle.

4. Système selon l'une des revendications précédentes, dans lequel la commande d'accès (ACU) comprend une unité de commande d'accès (ZSE) et un certain nombre d'unités capteurs/actionneurs (SAE) couplées à l'unité de commande d'accès, chaque zone réseau (NC), zone de traitement (AC) et zone de stockage (DC) se voyant attribuer au moins une unité capteur/actionneur (SAE), chaque unité capteur/actionneur (SAE) disposant d'au moins un capteur et/ou un actionneur (GS ; TS ; RS ; PS), et l'unité de commande d'accès (ZSE) étant adaptée pour commander les unités capteurs/actionneurs (SAE).

5. Système selon la revendication 4 précédente,
dans lequel l'au moins un capteur et/ou un actionneur est sélectionné dans le groupe comprenant au moins une commande de poignée (GS), un interrupteur d'alimentation (PS), un capteur de bâti (RS), un capteur de porte (TS) et des combinaisons de ceux-ci.

6. Système selon l'une des deux revendications précédentes, dans lequel chaque unité capteur/actionneur (SAE) est adaptée pour amener la zone respective (NC ; AC ; DC) dans un état prédéterminé en cas de défaillance de l'unité de commande d'accès (ZSE) et/ou en cas de problème de communication entre l'unité capteur/actionneur et l'unité de commande d'accès.

7. Système selon l'une des revendications 4 à 6 précédentes, dans lequel l'unité de commande d'accès (ZSE) est couplée à un dispositif de stockage non réinscriptible (WORM, « write once read many ») et est en outre adaptée pour stocker des états et/ou des actions détectés par les capteurs et/ou les actionneurs dans le dispositif de stockage non réinscriptible.

8. Procédé de traitement de données dans un système selon l'une des revendications précédentes, dans lequel
- les données à traiter sont transmises sous forme chiffrée de la zone réseau (NC) et/ou de la zone de stockage (DC) à la zone de traitement (AC) du système,
- les données transmises à la zone de traitement (AC) sont déchiffrées dans la zone de traitement, une clé de chiffrement privée étant utilisée pour déchiffrer les données, laquelle clé ne peut être stockée que dans la zone de traitement,
- les données déchiffrées ne sont traitées que dans la zone de traitement (AC),
- les données traitées sont chiffrées dans la zone de traitement (AC), et
- les données chiffrées sont transmises à la zone réseau (NC) et/ou à la zone de stockage (DC),
**caractérisé en ce que**
seuls des moyens de stockage volatils sont utilisés dans la zone de traitement (AC), la commande d'accès (ACU) surveillant des accès à la zone de traitement et interrompant l'alimentation électrique de la zone de traitement lorsqu'un accès non autorisé est détecté, de sorte que les moyens de stockage volatils de la zone de traitement perdent leur contenu de mémoire.

9. Procédé selon la revendication précédente, dans lequel la zone de traitement (AC), lors du démarrage de ses composants, effectue pour chaque composant une comparaison d'empreintes digitales entre une empreinte digitale matérielle du composant et une empreinte digitale logicielle du logiciel qui doit démarrer le composant, et ne démarre le composant que si l'empreinte digitale matérielle correspond à l'empreinte digitale logicielle.

10. Procédé selon l'une des deux revendications précédentes, dans lequel les données dans le système ne sont présentes sous forme déchiffrée que dans la zone de traitement.
